# EUROPÄISCHE PATENTSCHRIFT

(11) **EP 2 557 464 B1**
(45) Veröffentlichungstag und Bekanntmachung des Hinweises auf die Patenterteilung: **29.07.2015**
(21) Anmeldenummer: 11177366.9
(22) Anmeldetag: 12.08.2011
(51) Int. Cl.: G05B 19/042, G05B 19/418

(54) **Verfahren zum Betrieb eines Automatisierungssystems**
Method for operating an automation system
Procédé destiné au fonctionnement d'un système d'automatisation

(43) Veröffentlichungstag der Anmeldung: 13.02.2013
(73) Patentinhaber: Siemens Aktiengesellschaft, 80333 München (DE)
(72) Erfinder: Jartyn, Hermann, 91338 Igensdorf (DE)

(56) Entgegenhaltungen:
- EP-A1- 1 046 972
- EP-A2- 2 157 536
- DE-A1- 10 055 168
- DE-A1-102007 039 425
- DE-A1-102007 039 428

## Beschreibung

Die vorliegende Erfindung betrifft ein Verfahren zum Betrieb eines Automatisierungssystems, insbesondere eines verteilten Automatisierungssystems, mit zumindest einer ersten und einer zweiten Zentraleinheit oder zumindest zwei Automatisierungsgeräten, z.B. in Form von speicherprogrammierbaren Steuerungen oder dergleichen, mit jeweils einer solchen Zentraleinheit. Beide Zentraleinheiten sind kommunikativ verbunden und zumindest mit der zweiten Zentraleinheit ist eine Mehrzahl von weiteren Automatisierungsgeräten kommunikativ verbunden.

Der Begriff "Automatisierungsgerät" umfasst sämtliche Geräte, Einrichtungen oder Systeme, also neben z.B. Steuerungen, wie speicherprogrammierbaren Steuerungen, Prozessrechnern, (Industrie-)Computern, dezentralen Peripheriegeräten, Bedien- und Beobachtungsgeräten und dergleichen auch Antriebs- oder sonstige Aggregatsteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Bei einer Automatisierungslösung mit einer Zentraleinheit und mehreren damit kommunikativ verbundenen Automatisierungsgeräten ergibt sich je nach Art und Anzahl der angeschlossenen Automatisierungsgeräte eine erhebliche Komplexität des resultierenden Automatisierungssystems. Diese Komplexität steigt nochmals, wenn zum Anschluss der Automatisierungsgeräte unterschiedliche Verbindungsarten, also unterschiedliche Kommunikationsmedien und/oder unterschiedliche Kommunikationsprotokolle zum Einsatz kommen. Exemplarisch sei hier auf eine Situation verwiesen, bei der ein Anschluss der jeweiligen Automatisierungsgeräte mit drei unterschiedlichen Netzen, z.B. Profibus, Profibus Integrated und Profinet, erfolgt.

Die oben skizzierte Komplexität steigt nochmals, wenn mit der beispielhaft erwähnten Zentraleinheit eine weitere Zentraleinheit (erste Zentraleinheit) kommunikativ verbunden ist, die auf die an die andere Zentraleinheit (zweite Zentraleinheit) angeschlossenen Automatisierungsgeräte zugreifen soll. Dann muss eine Projektierung der Kommunikationsbeziehungen und Kommunikationspfade/Transportkanäle/Kommunikationskanäle - im Folgenden zusammenfassend als Kommunikationskanal bezeichnet - zwischen der zweiten Zentraleinheit und zumindest den für die erste Zentraleinheit relevanten Automatisierungsgeräten auch für die erste Zentraleinheit erfolgen, so dass sich der Aufwand bei der Projektierung der zweiten Zentraleinheit für die erste Zentraleinheit wiederholt oder zumindest im Wesentlichen wiederholt. Zudem ist eine Wiederholung einer solchen Projektierung fehleranfällig und dabei evtl. gemachte Fehler sind nur schwer zu finden.

Aus der DE 10 2007 039 425 A ist ein Verfahren bekannt, bei dem Kommunikationsbeziehungen zwischen einem als Master fungierenden Steuerknoten und einem als Slave fungierenden Steuerknoten über ein Stellvertreterobjekt und ein Anknüpfungsobjekt jeweils im Master bzw. im Slave abgewickelt werden. Ein Slave kann auf diese Weise mit mehreren Mastern verknüpft sein und weist dann für jeden Master ein eigenes Anknüpfungsobjekt auf. Aus der DE 10 2007 039 428 A ist eine Programmiervorrichtung zur Konfiguration von Kommunikationsbeziehungen in einem Feldbusnetzwerk bekannt, die auf der Basis automatisch ermittelter Daten zum Umfang des Netzwerks arbeitet.

Eine Aufgabe der Erfindung besteht entsprechend darin, ein Verfahren zum Betrieb eines Automatisierungssystems mit mindestens zwei Zentraleinheiten und einer Mehrzahl von an die zweite Zentraleinheit angeschlossenen Automatisierungsgeräten anzugeben, bei dem die oben skizzierten Nachteile vermieden, zumindest jedoch hinsichtlich ihrer Auswirkungen reduziert werden.

Diese Aufgabe wird erfindungsgemäß mit einem Verfahren mit den Merkmalen des Anspruchs 1 gelöst. Dazu ist bei einem Verfahren zum Betrieb eines Automatisierungssystems mit einer ersten und einer zweiten Zentraleinheit, wobei die erste und die zweite Zentraleinheit kommunikativ verbunden sind, wobei mit der zweiten Zentraleinheit eine Mehrzahl von Automatisierungsgeräten kommunikativ verbunden ist und wobei in einem Kommunikationsdatensatz Informationen zu einer Mehrzahl von Kommunikationskanälen zwischen der zweiten Zentraleinheit und einem jeweiligen Automatisierungsgerät zusammengestellt sind, insbesondere vorgesehen, dass anhand des Kommunikationsdatensatzes der ersten Zentraleinheit automatisch Informationen über eine Mehrzahl von Kommunikationsbeziehungen mit Kommunikationskanälen und dem jeweils darüber erreichbaren Automatisierungsgerät übermittelt werden.

Der oben erwähnte Kommunikationsdatensatz ist mittelbares oder unmittelbares Ergebnis einer Projektierung der zweiten Zentraleinheit und der daran angeschlossenen Automatisierungsgeräte. Der Begriff Kommunikationsdatensatz ist dabei sowohl als Zusammenfassung aller kommunikationsrelevanten Daten in einem z.B. alle Projektierungsdaten umfassenden Datensatz wie auch als Bezeichnung für einen z.B. aus einem solchen Projektierungsdatensatz gewonnenen separaten Datensatz zu verstehen. Indem anhand des Kommunikationsdatensatzes der ersten Zentraleinheit automatisch Informationen über eine Mehrzahl von Kommunikationsbeziehungen mit Kommunikationskanälen und dem jeweils darüber erreichbaren Automatisierungsgerät übermittelt werden, entfällt auf Seiten der ersten Zentraleinheit die Notwendigkeit, die für die zweite Zentraleinheit vorgenommene Projektierung, welche die mittelbare oder unmittelbare Basis für den Kommunikationsdatensatz bildet, erneut vornehmen zu müssen. Dabei können die Informationen des Kommunikationsdatensatzes in ihrer Gesamtheit automatisch an die erste Zentraleinheit übermittelt werden. Es kann sich jedoch auch ergeben, dass einzelne Kommunikationsbeziehungen zwischen der zweiten Zentraleinheit und dem jeweiligen Automatisierungsgerät für die Projektierung der ersten Zentraleinheit nicht relevant sind, so dass diesbezüglich Daten keiner Übermittlung an die erste Zentraleinheit bedürfen, so dass es ausreicht, dass anhand des Kommunikationsdatensatzes der ersten Zentraleinheit automatisch Informationen über eine Mehrzahl von Kommunikationsbeziehungen, aber evtl. nicht zu allen Kommunikationsbeziehungen, zu denen sich Informationen in dem Kommunikationsdatensatz finden, übermittelt werden. Dieser Aspekt der Erfindung ist also kurz gefasst eine automatische Übermittlung von Projektierungsdaten der zweiten Zentraleinheit an die erste Zentraleinheit, so dass auf Basis dieser Daten eine Projektierung der ersten Zentraleinheit erfolgen kann, wobei z.B. auch eine automatische Auswertung der übertragenen Daten möglich ist, so dass die Projektierung der ersten Zentraleinheit auf Basis der übertragenen Daten zumindest teilweise ebenfalls automatisch erfolgt.

Der Kommunikationsdatensatz als Ergebnis der Projektierung der zweiten Zentraleinheit entsteht weitgehend automatisch, wenn ein Projektierer der ersten Zentraleinheit und des Netzwerks der damit zu verbindenden Automatisierungsgeräte an einem Engineeringsystem oder einem sonstigen Projektierungswerkzeug die zu verwendenden Automatisierungsgeräte und die zwischen diesen und der zweiten Zentraleinheit jeweils bestehenden Kommunikationskanäle und Kommunikationsbeziehungen projektiert. Bei einer solchen Projektierung werden z.B. Namen der jeweiligen Automatisierungsgeräte festgelegt oder es werden anhand der Typbezeichnungen solcher Automatisierungsgeräte automatisch Namen generiert. Des Weiteren wird bei einer solchen Projektierung festgelegt, ob das jeweilige Automatisierungsgerät direkt an die zweite Zentraleinheit angeschlossen ist oder ob sich das jeweilige Automatisierungsgerät etwa in einem sogenannten Subnetz befindet und insoweit mittelbar an die zweite Zentraleinheit, nämlich über ein anderes Automatisierungsgerät, von dem dieses Subnetz ausgeht, angeschlossen ist. Schließlich wird automatisch oder manuell eine Adresse des jeweiligen Automatisierungsgerätes festgelegt, über die das Automatisierungsgerät im Betrieb des Automatisierungssystems für Datenübertragungen erreichbar ist. Indem diese Daten Bestandteil des Kommunikationsdatensatzes sind und als solche als Information über eine Mehrzahl von Kommunikationsbeziehungen an die erste Zentraleinheit automatisch übermittelt werden, stehen die wesentlichen kommunikationsrelevanten Projektierungsdaten der zweiten Zentraleinheit auch für die erste Zentraleinheit zur Verfügung.

Im Weiteren ist bei dem Verfahren vorgesehen, dass anhand des Kommunikationsdatensatzes für die erste Zentraleinheit ein Kommunikationsbaustein erstellt wird. Bei dem Kommunikationsbaustein handelt es sich um einen Softwarebaustein in einem Steuerungsprogramm für die erste Zentraleinheit. Der Kommunikationsbaustein erhält aufgrund der Daten des Kommunikationsdatensatzes zumindest eine bestimmte Anzahl von Eingängen, ggf. eine bestimmte Anzahl von Eingängen und eine gleiche Anzahl von Ausgängen. Diese Anzahl richtet sich nach der Anzahl der Kommunikationskanäle in dem Kommunikationsdatensatz oder der Anzahl der für die erste Zentraleinheit relevanten Kommunikationskanäle in dem Kommunikationsdatensatz. Der Kommunikationsbaustein ermöglicht eine Übertragung von Daten von der ersten Zentraleinheit zu einem mit der zweiten Zentraleinheit kommunikativ verbundenen Automatisierungsgerät, indem die erste Zentraleinheit die zu übertragenden Daten unter Verwendung des dem jeweiligen Kommunikationskanal entsprechenden Eingangs an den Kommunikationsbaustein übermittelt. Der Kommunikationsbaustein übernimmt sodann anhand der Daten aus dem Kommunikationsdatensatz die Übermittlung an das jeweilige Automatisierungsgerät. Zur Handhabung der üblicherweise bidirektionalen Kommunikationskanäle ist mit jedem Eingang ein Ausgang kombiniert, so dass der Ausgang als Endpunkt eines zur Übertragung von zum Beispiel Quittungen oder dergleichen dienenden Kommunikationskanals fungiert.

In der Fachterminologie wird eine Mehrzahl von Eingängen und/oder Ausgängen für einen Softwarebaustein in einem Steuerungsprogramm auch als Slot bezeichnet, so dass die Übertragung von Daten von der ersten Zentraleinheit an ein mit der zweiten Zentraleinheit verbundenes Automatisierungsgerät auch als das Senden der jeweiligen Daten durch die erste Zentraleinheit an genau einen solchen Slot des Kommunikationsbausteins aufgefasst werden kann. Wesentlich ist dabei, dass der Kommunikationsbaustein innerhalb der ersten Zentraleinheit als Stellvertreter für die zweite Zentraleinheit und eine Mehrzahl damit kommunikativ verbundener Automatisierungsgeräte steht. Das von der zweiten Zentraleinheit ausgehende Netzwerk mit den davon umfassten Kommunikationskanälen und angeschlossenen Automatisierungsgeräten reduziert sich für die erste Zentraleinheit auf eine zentrale Stelle, nämlich den Kommunikationsbaustein. Um dennoch eine dedizierte Kommunikation mit genau einem Automatisierungsgerät in dem von der zweiten Zentraleinheit ausgehenden Netzwerk veranlassen zu können, ist für jedes derartige Automatisierungsgerät und den dorthin führenden Kommunikationskanal ein Eingang und/oder Ausgang, also ein Slot, des Kommunikationsbausteins vorgesehen. Das Ansprechen eines Automatisierungsgerätes in dem externen Netzwerk reduziert sich damit aus Sicht der ersten Zentraleinheit auf das Ansprechen des jeweiligen Eingangs/des jeweiligen Slots des Kommunikationsbausteins. Eine eventuelle Komplexität des externen Netzwerks ist damit für die erste Zentraleinheit vollkommen transparent. Die notwendige Übermittlungsart und der Kommunikationskanal wird durch den Kommunikationsbaustein selbst ausgewählt und zwar anhand der mit dem Kommunikationsdatensatz erhaltenen Informationen. Wenn der Kommunikationsbaustein an einem bestimmten Eingang/Slot angesprochen wird, ergibt sich damit, zu welchem Automatisierungsgerät des externen Netzwerks eine Kommunikationsbeziehung nötig wird. Anhand dieser Daten kann aus den mit dem Kommunikationsdatensatz erhaltenen Informationen der Kommunikationskanal zu dem jeweiligen Automatisierungsgerät, dessen Zieladresse, usw. ermittelt werden, so dass der Kommunikationsbaustein die eigentliche Übertragung der an dessen Eingang/an dessen Slot übermittelten Daten zunächst zur zweiten Zentraleinheit und sodann zum jeweiligen Automatisierungsgerät veranlassen kann.

Bei einer zusätzlichen oder alternativen Ausführungsform ist vorgesehen, dass in dem Kommunikationsdatensatz die Informationen zu einer Mehrzahl von Kommunikationskanälen zwischen der zweiten Zentraleinheit und einem jeweiligen Automatisierungsgerät mit jeweils einer eindeutigen Kennung für jeden Kommunikationskanal zusammengestellt sind und dass der Kommunikationsdatensatz von der ersten Zentraleinheit interpretiert wird und anhand der Kennung und einer in einer Automatisierungslösung für die erste Zentraleinheit verwendeten entsprechenden Kennung die jeweiligen Daten des Kommunikationsdatensatzes in die Automatisierungslösung für die erste Zentraleinheit übernommen werden. Indem die Daten des Kommunikationsdatensatzes unmittelbar in die Automatisierungslösung für die erste Zentraleinheit übernommen werden, stehen sie für einen Programmierer, der die Automatisierungslösung für die erste Zentraleinheit erstellt oder ergänzt, unmittelbar zur Verfügung. Indem die Übernahme anhand zweier Kennungen erfolgt, nämlich anhand einer für einen Kommunikationskanal zu einem Automatisierungsgerät im Rahmen der Projektierung der zweiten Zentraleinheit vergebenen Kennung und einer entsprechenden Kennung in einer Projektierung der ersten Zentraleinheit im Hinblick auf Kommunikationsbeziehungen/ Kommunikationskanäle zu den Automatisierungsgeräten im externen Netzwerk, kann eine unmittelbare Zuordnung der mit dem Kommunikationsdatensatz automatisch an die erste Zentraleinheit übermittelten Informationen erfolgen. Ein Programmierer der Automatisierungslösung für die erste Zentraleinheit kann also z. B. Einsicht in die mit dem Kommunikationsdatensatz erhaltenen Informationen nehmen und zwar anhand der jeweiligen Kennung.

Bei einer Programmierung oder Projektierung einer von der ersten Zentraleinheit ausgehenden Datenübertragung zu einem Automatisierungsgerät in dem externen Netzwerk, kann dann anhand des Kommunikationsdatensatzes und der Kennung eine Überprüfung der Programmierung/Projektierung erfolgen. Die beiden Kennungen ergeben sich dabei wie folgt: Bei der Projektierung der von der zweiten Zentraleinheit ausgehenden Kommunikationskanäle ergibt sich für jeden Kommunikationskanal und dessen Kommunikationsendpunkt, als für das jeweilige Automatisierungsgerät, eine Kennung. Bei der Projektierung der von der ersten Zentraleinheit ausgehenden Kommunikationskanäle mit eventuell einem Kommunikationsendpunkt in dem externen Netzwerk ergibt sich ebenfalls eine Kennung. Wenn anhand der bei der Projektierung der ersten Zentraleinheit erhaltenen Kennung nun ein Zugriff auf den Kommunikationsdatensatz und dort die mit einer entsprechenden Kennung gekennzeichneten Daten erfolgt, kann die korrekte Verwendung oder die Verwendbarkeit bestimmter Parameter, Adressen, usw. für diese Kommunikationsbeziehung geprüft werden. Aus dem Kommunikationsdatensatz ergibt sich beim Zugriff mit der jeweiligen Kennung z.B. die Adresse des jeweiligen Kommunikationsendpunkts. Diese Adresse muss auch bei der Programmierung der Kommunikationsbeziehung ausgehend von der ersten Zentraleinheit verwendet werden. Die Kontrollmöglichkeit anhand des Kommunikationsdatensatzes liefert also entweder für den Programmierer ohne großen Aufwand die benötigten Daten oder ermöglicht dem Programmierer, die korrekte Verwendung von Adressen und sonstigen Parametern in bereits für die Kommunikationsbeziehung angelegten Programmcodeanweisungen zu prüfen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens und/oder der oben bereits skizzierten Ausführungsformen ist vorgesehen, dass der Kommunikationsdatensatz automatisch aus einem Projektierungsdatensatz erstellt wird, der die zweite Zentraleinheit und die daran mittelbar oder unmittelbar angeschlossenen Automatisierungsgeräte und die zwischen der ersten Zentraleinheit und jedem Automatisierungsgerät bestehenden Kommunikationskanäle beschreibt. Der Vorteil dieser Ausführungsform besteht darin, dass der Projektierungsdatensatz sukzessive mit der Projektierung der zweiten Zentraleinheit und des davon ausgehenden Kommunikationsnetzes mit den jeweils angeschlossenen Automatisierungsgeräten entsteht. Die automatische Erstellung kann erfolgen, indem der Projektierungsdatensatz nach kommunikationsrelevanten Daten durchsucht wird. Dann können alle kommunikationsrelevanten Daten in den Kommunikationsdatensatz übernommen werden oder für eine Übernahme in den Kommunikationsdatensatz markiert werden. Dabei besteht die Möglichkeit, auf den Umfang der Übernahme der Daten aus dem Projektierungsdatensatz in den Kommunikationsdatensatz Einfluss zu nehmen, etwa indem einzelne Automatisierungsgeräte und/oder Kommunikationskanäle von einer Übernahme in den Kommunikationsdatensatz ausgenommen oder speziell für die Übernahme in den Kommunikationsdatensatz ausgewählt werden. Eine solche Auswahl kann grafisch unterstützt erfolgen, etwa indem eine Topologie des projektierten Kommunikationsnetzwerks an einem Bildschirm oder sonstigen Anzeigegerät dargestellt wird und einzelne Kommunikationskanäle oder Automatisierungsgeräte für eine Übernahme in den Kommunikationsdatensatz oder für einen Ausschluss von einer Übernahme in den Kommunikationsdatensatz ausgewählt werden.

Bei einer besonderen Ausführungsform der soeben skizzierten Variante des Verfahrens ist vorgesehen, dass zur automatischen Erstellung des Kommunikationsdatensatzes aus dem Projektierungsdatensatz im Projektierungsdatensatz Daten identifiziert werden, die einen Kommunikationsendpunkt beschreiben, also z.B. ein als Kommunikationsendpunkt fungierendes Automatisierungsgerät. Mit einer grafischen oder sonst geeigneten Auswahl zur Übernahme oder zum Ausschluss von der Übernahme in den Kommunikationsdatensatz werden die zu dem jeweiligen Kommunikationsendpunkt gehörenden Daten, also dessen Adresse und/oder Daten zu einem Kommunikationskanal zu dem jeweiligen Automatisierungsgerät, in den Kommunikationsdatensatz übernommen oder von einer solchen Übernahme ausgeschlossen. Bei einer grafischen Auswahl kommt eine Markierung zur Übernahme oder das Entfernen einer solchen Markierung durch das heute übliche Aktivieren oder Anklicken mit einem Zeigegerät, evtl. auch in Form eines sogenannten Doppelklicks oder dergleichen, in Betracht.

Bei einer speziellen Ausführungsform des Verfahrens ist vorgesehen, dass zumindest ein Teil der Kommunikationskanäle Profisafe-Verbindungen sind und dass für jeden Endpunkt einer Profisafe-Verbindung des Kommunikationsdatensatzes genau ein Eingang und/oder Ausgang (Slot) in dem Kommunikationsbaustein angelegt wird. Dann sind zumindest die Profisafe-Verbindungen, die einem vorgegebenen Sicherheitsstandard genügen, bei deren Verwendung durch die erste Zentraleinheit ausschließlich über den Kommunikationsbaustein geführt, so dass, wenn der Kommunikationsbaustein die selben Sicherheitsstandards erfüllt, die Kommunikationsbeziehung ausgehend von der ersten Zentraleinheit insgesamt den für Profisafe vorgesehenen Sicherheitsbestimmungen genügt.

Hinsichtlich der Übernahme der Daten des Kommunikationsdatensatzes im Bereich der ersten Zentraleinheit anhand der für jeden Kommunikationskanal vorgesehenen Kennung und einer korrespondierenden Kennung in einer Automatisierungslösung für die erste Zentraleinheit ist vorgesehen, dass die Übernahme in Kommentare der Automatisierungslösung für die erste Zentraleinheit erfolgt. Solche Kommentare stehen für den Programmierer der Automatisierungslösung für die erste Zentraleinheit ohne Weiteres zur Einsichtnahme zur Verfügung, ohne dass sie in sonstiger Art und Weise Einfluss auf die Funktionalität der Automatisierungslösung nehmen. Bei eventuellen Diskrepanzen zwischen den Daten aus dem Kommunikationsdatensatz und entsprechenden Daten in der Automatisierungslösung für die erste Zentraleinheit kann die bloße Übernahme in Kommentare also niemals zu einer Fehlfunktion der Automatisierungslösung für die erste Zentraleinheit führen. Anhand der Kommentare kann der Programmierer sich aber jederzeit dahingehend orientieren, ob bei einer Verwendung eines Kommunikationskanals in dem externen Netzwerk zur Übermittlung von Daten zu oder von dem jeweiligen Automatisierungsgerät die korrekten Daten und Parameter verwendet wurden, indem die in der Automatisierungslösung verwendeten Daten und Parameter mit den automatisch in einen Kommentar der Automatisierungslösung übernommenen Daten gemäß dem Projektierungsdatensatz verglichen werden.

Insgesamt kommt das Verfahren und seine Ausgestaltungen wie hier und nachfolgend beschrieben speziell für ein Automatisierungssystem mit einer fehlersicheren Zentraleinheit als erste Zentraleinheit und einer Ausführung des Kommunikationsbausteins als fehlersicherer Kommunikationsbaustein in Betracht. Wenn nämlich eingangs skizziert wurde, dass die Projektierung umfangreicher Kommunikationsnetze aufwendig und fehleranfällig ist, gilt dies umso mehr, wenn die Netze und die zu deren Verwendung vorgesehene Software fehlersicher ausgeführt werden muss. Die Komplexität bei der Übernahme einer solchen Projektierung für eine Projektierung einer fehlersicheren Zentraleinheit steigt damit nochmals ganz erheblich. Vor diesem Hintergrund kommt der Konstellation mit einer fehlersicheren Zentraleinheit als erster Zentraleinheit vor allem zugute, dass der Kommunikationsbaustein, der bei einer fehlersicheren Zentraleinheit als fehlersicherer Kommunikationsbaustein ausgeführt ist, als Stellvertreter für das komplette externe Netzwerk fungiert und dieses Netzwerk dann für die fehlersichere Zentraleinheit auf den Kommunikationsbaustein mit seinen Eingängen und/oder Ausgängen (Slots) reduziert ist. Das externe Netzwerk ist aus Sicht der fehlersicheren ersten Zentraleinheit damit gleichsam in dem fehlersicheren Kommunikationsbaustein gekapselt. Die Fehlersicherheit des Kommunikationsbausteins muss nur einmal gewährleistet werden, um dann für unterschiedliche externe Netzwerke jederzeit wiederverwendbar zu sein, nachdem von einer Änderung des externen Netzwerks nicht die Funktionalität des fehlersicheren Kommunikationsbausteins, sondern nur die Parametrierung der durch die Slots abgebildeten Kommunikationskanäle betroffen ist.

Die oben genannte Aufgabe wird auch mit einem Automatisierungsgerät oder einer Zentraleinheit in einem solchen Automatisierungsgerät, speziell einer Zentraleinheit einer speicherprogrammierbaren Steuerung oder einer NC-Steuerung oder dergleichen, also Zentraleinheiten, wie sie hier und im Folgenden bisher als erste und zweite Zentraleinheit bezeichnet wurden, gelöst, die nach dem Verfahren wie hier und im Folgenden beschrieben arbeitet bzw. arbeiten und dazu Mittel zur Durchführung des Verfahrens umfasst bzw. umfassen. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Automatisierungsgerät mit einer solcher Zentraleinheit oder eine solche Zentraleinheit, in dessen oder deren Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein verteiltes Automatisierungssystem mit einer ersten und einer zweiten Zentraleinheit,
- FIG 2: eine andere Darstellung des Automatisierungssystems gemäß FIG 1 mit weiteren Details,
- FIG 3: eine Darstellung eines als virtueller Repräsentant der zweiten Zentraleinheit und daran angeschlossener Kommunikationsperipherie und darüber erreichbaren Kommunikationsendpunkten fungierenden Kommunikationsbausteins,
- FIG 4: eine Darstellung einer textuellen Beschreibung eines Kommunikationskanals,
- FIG 5: eine Darstellung zur Illustration einer Zuordnung von projektierten Kommunikationsbeziehungen und
- FIG 6: eine Darstellung zur Illustration einer Möglichkeit zur Präsentation importierter und zugeordneter Daten zur Beschreibung eines Kommunikationskanals.

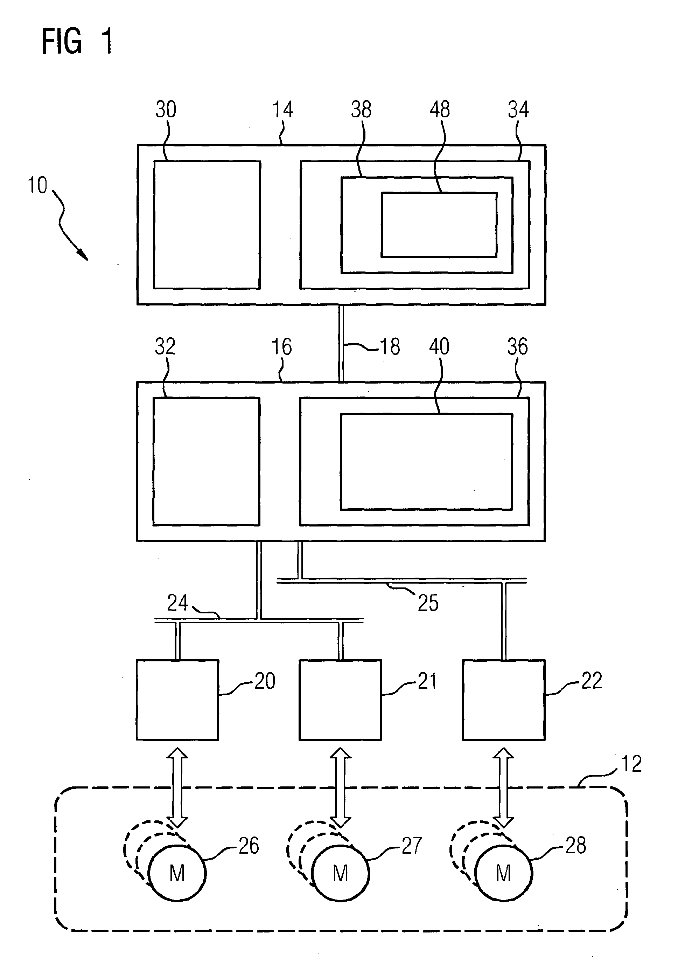

FIG 1 zeigt als Beispiel für ein insgesamt mit 10 bezeichnetes Automatisierungssystem in schematisch vereinfachter Darstellung ein verteiltes Automatisierungssystem 10, das in an sich bekannter Art und Weise zur Steuerung und/oder Überwachung eines nicht näher dargestellten technischen Prozesses 12 vorgesehen ist. Das Automatisierungssystem 10 umfasst eine erste Zentraleinheit 14 und eine zweite Zentraleinheit 16. Zwischen beiden Zentraleinheiten besteht eine kommunikative Verbindung 18, z.B. in Form einer Busverbindung, insbesondere als Feldbusverbindung. Bei der ersten und/oder zweiten Zentraleinheit 14, 16 handelt es sich z.B. um an sich bekannte Zentraleinheiten einer speicherprogrammierbaren Steuerung oder einer NC-Steuerung.

Die zweite Zentraleinheit 16 ist mit einer Mehrzahl von Automatisierungsgeräten kommunikativ verbindbar und hier als mit einem ersten, zweiten und dritten Automatisierungsgerät 20, 21, 22 kommunikativ verbunden gezeigt. Bei den betreffenden Verbindungen 24, 25 handelt es sich ebenfalls um Busverbindungen, insbesondere Feldbusverbindungen. An jedes Automatisierungsgerät 20, 21, 22, bei denen es sich beispielsweise um in der Fachterminologie als Drive-Objekte bezeichnete Antriebssteuerungseinheiten handeln kann, sind als dem technischen Prozess 12 zugeordnete Aktoren oder Sensoren im dargestellten Beispiel jeweils Motore 26, 27, 28 angeschlossen.

Jede kommunikative Verbindung 24, 25 zwischen der zweiten Zentraleinheit 16 und einem Automatisierungsgerät 20-22 wird hier und im Folgenden auch als Kommunikationskanal bezeichnet. Die Gesamtheit der Kommunikationskanäle und der jeweils als Kommunikationsendpunkt fungierenden Automatisierungsgeräte 20-22 wird hier und im Folgenden - ggf. unter Einschluss der zweiten Zentraleinheit 16 - als Kommunikationsnetz oder Kommunikationsnetzwerk bezeichnet und, soweit es um die Betrachtung dieses Kommunikationsnetzes aus der Perspektive der ersten Zentraleinheit 14 geht, als externes Kommunikationsnetz/-netzwerk.

Jede Zentraleinheit 14, 16 umfasst eine Verarbeitungseinheit 30, 32 in Form von oder nach Art eines Mikroprozessors sowie einen Speicher 34, 36. In den Speicher 34, 36 ist jeweils als Automatisierungslösung ein Computerprogramm, nämlich ein Steuerungsprogramm 38, 40 geladen. Im Betrieb der jeweiligen Zentraleinheit 14, 16 wird das jeweilige Steuerungsprogramm 38, 40 durch die jeweilige Verarbeitungseinheit 30, 32 ausgeführt und so die jeweilige Steuerung und/oder Überwachung des technischen Prozesses 12 bewirkt.

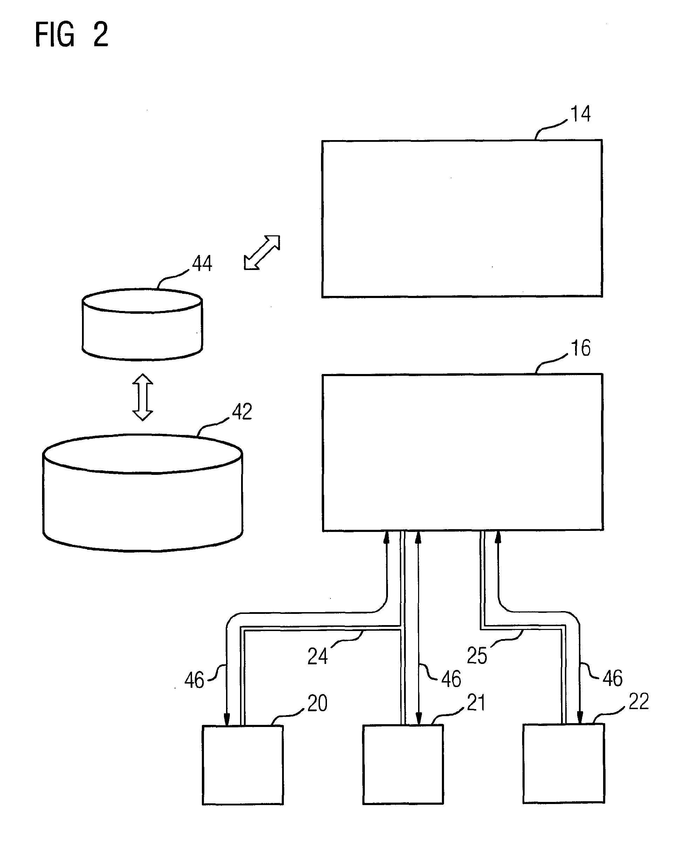

FIG 2 greift einen Teil der Darstellung aus FIG 1 auf, jedoch mit weniger Details. Gezeigt ist ein Projektierungsdatensatz 42, in dem nicht näher dargestellte Daten zur Projektierung der zweiten Zentraleinheit 16 und des davon ausgehenden Netzwerks (FIG 1) zusammengefasst sind. Aus dem Projektierungsdatensatz 42 oder in sonst geeigneter Art und Weise lässt sich ein Kommunikationsdatensatz 44 erstellen. Eine solche Erstellung kann automatisch erfolgen, z.B. indem die im Projektierungsdatensatz 42 zusammengefassten Daten nach einer Auszeichnung, welche die jeweiligen Daten als kommunikationsrelevant kennzeichnet, durchsucht werden und die entsprechenden Daten in den Kommunikationsdatensatz 44 übernommen werden. Wenn der Kommunikationsdatensatz 44 nicht als vom Projektierungsdatensatz 42 unabhängiger Datensatz erstellt wird, kann der Kommunikationsdatensatz 44 auch als Teilmenge des Projektierungsdatensatzes 42 aufgefasst werden und Bestandteil des Projektierungsdatensatzes 42 sein. Ohne Verzicht auf die weitergehende Allgemeingültigkeit wird die hier vorgelegte Beschreibung für die Annahme eines separaten und aus dem Projektierungsdatensatz 42 abgeleiteten Kommunikationsdatensatzes 44 fortgesetzt.

Der Projektierungsdatensatz 42 beschreibt die zweite Zentraleinheit 16, die daran mittelbar oder unmittelbar angeschlossenen Automatisierungsgeräte 20-22 und die zwischen der zweiten Zentraleinheit 16 und jedem Automatisierungsgerät 20-22 bestehenden Kommunikationskanäle 46, die hier aus Gründen der Übersichtlichkeit neben den zugrunde liegenden Verbindungen 24, 25 dargestellt sind, obwohl tatsächlich selbstverständlich nur ein Kommunikationskanal 46 über eine auch physikalisch bestehende kommunikative Verbindung 24, 25 denkbar ist.

Der Kommunikationsdatensatz 44 umfasst Informationen zu allen Kommunikationskanälen 46 zwischen der zweiten Zentraleinheit 16 und einem jeweiligen Automatisierungsgerät 20-22 oder zumindest Informationen zu einer Mehrzahl derartiger Kommunikationskanäle 46. Anhand des Kommunikationsdatensatzes 44 werden der ersten Zentraleinheit 14 automatisch Informationen über eine Mehrzahl von Kommunikationsbeziehungen mit Kommunikationskanälen 46 und dem jeweils darüber erreichbaren Automatisierungsgerät 20-22 übermittelt, wie dies in FIG 2 schematisch durch den diagonalen Blockpfeil verdeutlicht ist.

Eine besondere Form einer derartigen Übermittlung von Informationen über eine Mehrzahl von der zweiten Zentraleinheit 16 ausgehenden Kommunikationsbeziehungen besteht darin, dass anhand des Kommunikationsdatensatzes 44 für die erste Zentraleinheit 14 ein Kommunikationsbaustein 48 (FIG 1) erstellt wird. Dieser Kommunikationsbaustein 48 ist z.B. Bestandteil des Steuerungsprogramms 38 im Speicher 34 der ersten Zentraleinheit 14.

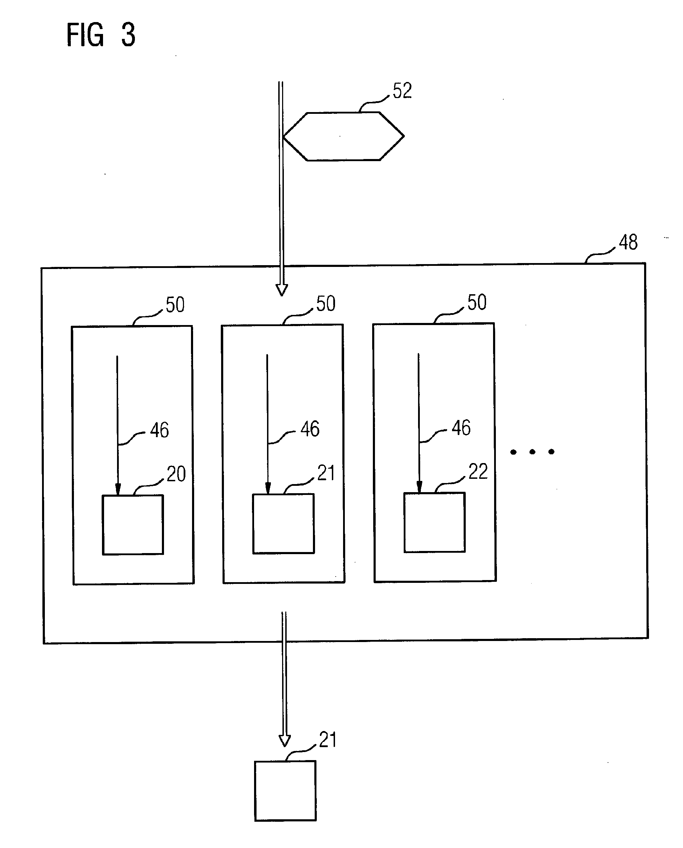

FIG 3 zeigt den Kommunikationsbaustein 48 in vergrößerter Darstellung mit weiteren Details, allerdings schematisch stark vereinfacht. Danach umfasst der Kommunikationsbaustein 48 eine Mehrzahl von im Folgenden als Slots 50 bezeichneten Eingängen und/oder Ausgängen. Die Slots 50 sind in dem Blockschaltbild des Kommunikationsbausteins 48 gemäß FIG 3 ebenfalls nur als Block dargestellt und es handelt sich um Softwareeingänge, ggf. kombinierte Softwareeingänge und -ausgänge, des Kommunikationsbausteins 48, also unterschiedliche Möglichkeiten, den Kommunikationsbaustein 48 aus dem Steuerungsprogramm 38 (FIG 1) anzusprechen. Die Anzahl der Slots 50 des Kommunikationsbausteins 48 entspricht der Anzahl oder der relevanten Anzahl der Kommunikationskanäle 46 im Kommunikationsdatensatz 44 (FIG 2).

In der Darstellung gemäß FIG 3 ist die Tatsache, dass für jeden Kommunikationskanal 46 sowie das dessen Kommunikationsendpunkt bildende Automatisierungsgerät 20-22 ein Slot 50 in dem Kommunikationsbaustein 48 vorgesehen ist, symbolisch durch eine der Anzahl der in FIG 1 gezeigten Automatisierungsgeräte 20-22 entsprechende Anzahl von Slots 50 dargestellt. Tatsächlich sind für jeden Slot 50 entsprechende Parameter gespeichert, die den Kommunikationskanal 46 und den jeweiligen Kommunikationsendpunkt, also insbesondere das dortige Automatisierungsgerät 20-22, beschreiben. Eine Übertragung von Daten 52 durch die erste Zentraleinheit 14 z.B. an das mit der zweiten Zentraleinheit 16 kommunikativ verbundene zweite Automatisierungsgerät 21 erfolgt, indem die erste Zentraleinheit 14 die zu übertragenden Daten 52 unter Verwendung des dem jeweiligen Kommunikationskanal 46 entsprechenden Slots 50 an den Kommunikationsbaustein 48 übermittelt und der Kommunikationsbaustein 48 anhand der Daten aus dem Kommunikationsdatensatz 44 die Übermittlung an das jeweilige Automatisierungsgerät 21 übernimmt. Diese Übermittlung ist in der Darstellung durch die vertikalen Pfeile zum jeweiligen Slot 50 und ausgehend von diesem dargestellt. Die Übermittlung der Daten 52 durch den Kommunikationsbaustein 48 anhand der Daten aus dem Kommunikationsdatensatz 44 meint entweder einen Zugriff des Kommunikationsbausteins 48 auf die Daten im Kommunikationsdatensatz 44 im Zeitpunkt der Übermittlung oder im Zusammenhang mit der Übermittlung oder einen Zugriff des Kommunikationsbausteins 48 auf interne Daten des Kommunikationsbausteins 48, die anhand der Daten des Kommunikationsdatensatzes 44 als Parameter für den Kommunikationsbaustein 48, insbesondere als Parameter für dessen Slots 50 übernommen wurden.

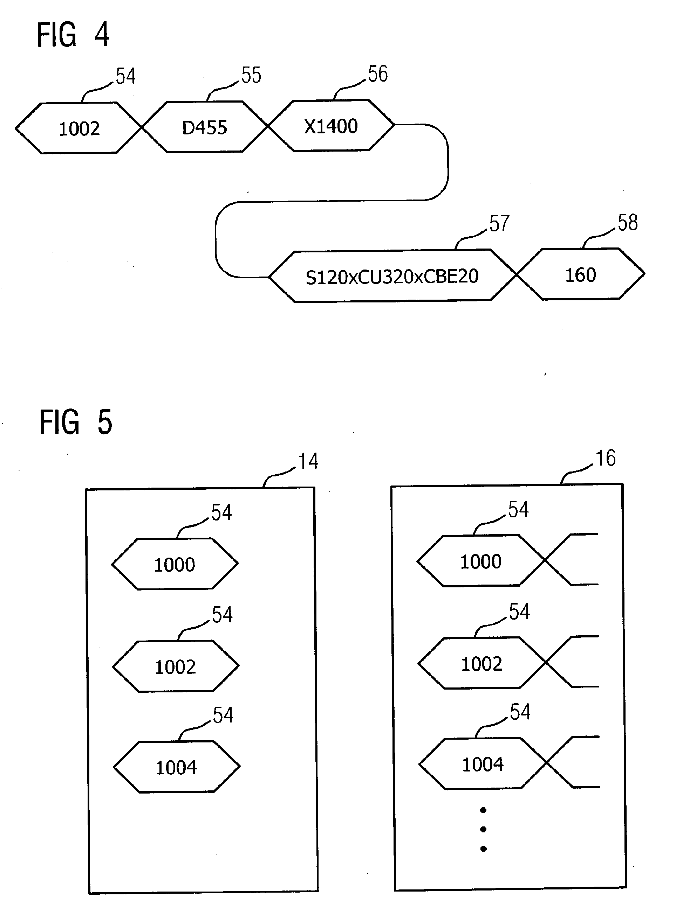

FIG 4 zeigt eine mögliche Darstellungsform eines Kommunikationskanals 46 (FIG 2). Diese umfasst eine im Folgenden als Kennung 54 bezeichnete Identnummer, hier "1002", eine Bezeichnung des zentralen Gerätes oder der Zentraleinheit, von dem der Kommunikationskanal 46 ausgeht, hier "D455", auf die im Folgenden als erste Gerätebezeichnung 55 Bezug genommen wird, eine Anschlussbezeichnung 56,hier "X1400", eine zweite Gerätebezeichnung 57 zur Referenzierung eines dezentralen Gerätes, hier "S120xCU320xCBE20", also des jeweiligen angeschlossenen Automatisierungsgerätes/Kommunikationsendpunkts und eine Zieladresse 58.

Solche insbesondere textuellen Darstellungen eines Kommunikationskanals 46 werden z.B. automatisch bei einer Projektierung der zweiten Zentraleinheit 16 mit einem entsprechenden Entwicklungswerkzeug, also zum Beispiel einem sogenannten Engineeringsystem, erzeugt. Eine solche Darstellung des Kommunikationskanals 46 beschreibt oder kennzeichnet diesen eindeutig. Die Beschreibung kombiniert Transport- und Gerätetypinformationen. Die Transportinformationen, bestehend aus der Identnummer 54 des Kommunikationskanals 46 und der Zieladresse 58 des jeweiligen Automatisierungsgeräts 20-22, kennzeichnen Anfangs- und Endpunkt des Kommunikationskanals 46. Die Gerätetypinformationen 55, 56, 57 beinhalten die Gerätetypologie. Üblicherweise handelt es sich um hierarchische Beschreibungen von Netztopologien mit ggf. unterschiedlichen Subnetzen, z.B. PROFIBUS, PROFIBUS Integrated, PROFINET, und einer Vielzahl von zum Beispiel als Steuergeräten fungierenden Automatisierungsgeräten 20-22 und weiteren, als Antriebsgeräten fungierenden Automatisierungsgeräten 20-22. Alle Netztopologien werden auf ein einheitliches Darstellungsmodell von zentralem Gerät, dezentralem gerät und Anschlusspunkt in Form einer Klemmenbezeichnung vereinfacht. Diese Beschreibung eines Kommunikationskanals 46 kann auch als topologische Projektreferenz aufgefasst werden. Sie umfasst einen instanzspezifischen Kommunikationsweg 55, 58 und einen typabhängigen Geräteteil 56, 57. Dadurch kann formuliert werden, dass eine Kommunikationsbeziehung mit zum Beispiel der ersten Zentraleinheit 14 oder dem dortigen Kommunikationsbaustein 48 bis zum Kommunikationsendpunkt über die von der Beschreibung umfassten Geräte erfolgen soll.

Busadressen, Gerätenummern, Gerätenamen oder logische Adressen werden normalerweise nicht für eine solche topologische Projektreferenz verwendet. Dadurch wird der topologische Teil änderungsarm gehalten. Bei Änderungen solcher Parameter müssten sonst immer wieder die unterschiedlichen Projekte aktualisiert werden. Die als Kennung 54 fungierende Identnummer und die Zieladresse 58 müssen hingegen aktuell mit den Projektierungen übereinstimmen.

Diese oder ähnliche Daten (FIG 4) werden auch für den Kommunikationsbaustein 48 (FIG 3) und dessen Slots 50 zugrunde gelegt, wenn durch die erste Zentraleinheit 14 an einen der Slots 50 Daten 52 gesendet werden und der Kommunikationsbaustein 48 automatisch anhand des verwendeten Slots 50 die Übermittlung der erhaltenen Daten 52 an das durch den Slot 50 repräsentierte Automatisierungsgerät 20-22 weiterleitet und dafür zumindest die so kodierte Zieladresse 58 verwendet. Bei einer Mehrzahl von an die erste Zentraleinheit 14 angeschlossenen Zentraleinheiten, wie in FIG 1 und FIG 2 für nur eine weitere Zentraleinheit, nämlich die zweite Zentraleinheit 16 gezeigt, wird für die Auswahl der externen Zentraleinheit über die der jeweilige Kommunikationsendpunkt, also das jeweilige Automatisierungsgerät, erreichbar ist, zusätzlich zumindest noch die erste Gerätebezeichnung 55 verwendet um die zu übermittelnden Daten zum Ausgangspunkt des jeweiligen externen Netzwerks zu übermitteln.

FIG 5 zeigt schematisch auf einige wenige Details reduziert, dass auf Seiten der zweiten Zentraleinheit 16 im Rahmen einer Projektierung der zweiten Zentraleinheit 16 und des davon ausgehenden Kommunikationsnetzes eine Mehrzahl von Beschreibungen von Kommunikationskanälen 46 entsteht, wie sie in FIG 4 exemplarisch gezeigt ist. Jede derartige Beschreibung ist durch eine eindeutige Kennung 54 ("1000", "1002", "1004", ...) ausgewiesen. Auf Seiten der ersten Zentraleinheit 14 sind zum Zugriff auf die von der zweiten Zentraleinheit 16 ausgehenden Kommunikationskanäle 46 in einer Projektierung der ersten Zentraleinheit 14 ähnliche Beschreibungen der Kommunikationskanäle 46 hinterlegt und ebenfalls mit einer Kennung 54 versehen.

Die Kennung 54 basiert auf der eindeutigen Zieladresse 58. Die Eindeutigkeit der Zieladresse 58 wird durch einen Algorithmus gewährleistet, der als Funktionalität zum Beispiel eines Engineeringsystems sowohl bei der Projektierung der ersten Zentraleinheit wie auch bei der Projektierung der zweiten Zentraleinheit und bei der Projektierung jeder weiteren Zentraleinheit zum Einsatz kommt. Indem alle zu einem Automatisierungssystem 10 (FIG 1) erstellten Projekte mit dem gleichen Werkzeug bearbeitet und/oder gepflegt werden, ist die stets gleiche Berechnung der Zieladresse 58 und damit deren Eindeutigkeit in dem gesamten sich ergebenden Netzwerk sichergestellt.

Die auf Seiten jeder Zentraleinheit 14, 16 verwendeten Kennungen 54 erlauben eine Zuordnung der Beschreibungen der Kommunikationskanäle 46, z.B. indem in dem Kommunikationsdatensatz 44 die Informationen zu einer Mehrzahl von Kommunikationskanälen 46 zwischen der zweiten Zentraleinheit 16 und einem jeweiligen Automatisierungsgerät 20-22 mit jeweils einer eindeutigen Kennung 54 für jeden Kommunikationskanal 46 zusammengestellt sind und indem der Kommunikationsdatensatz 44 von der ersten Zentraleinheit importiert wird und anhand der Kennung 54 und einer in einer Projektierung oder Automatisierungslösung für die erste Zentraleinheit 14 verwendeten entsprechenden Kennung 54 die jeweiligen Daten des Kommunikationsdatensatzes 44 für die erste Zentraleinheit 14 übernommen werden. Die Darstellung in FIG 4 mit den dort gezeigten, einen Kommunikationskanal 46 beschreibenden Daten kann als Ausschnitt aus dem Inhalt des Kommunikationsdatensatzes 44 aufgefasst werden.

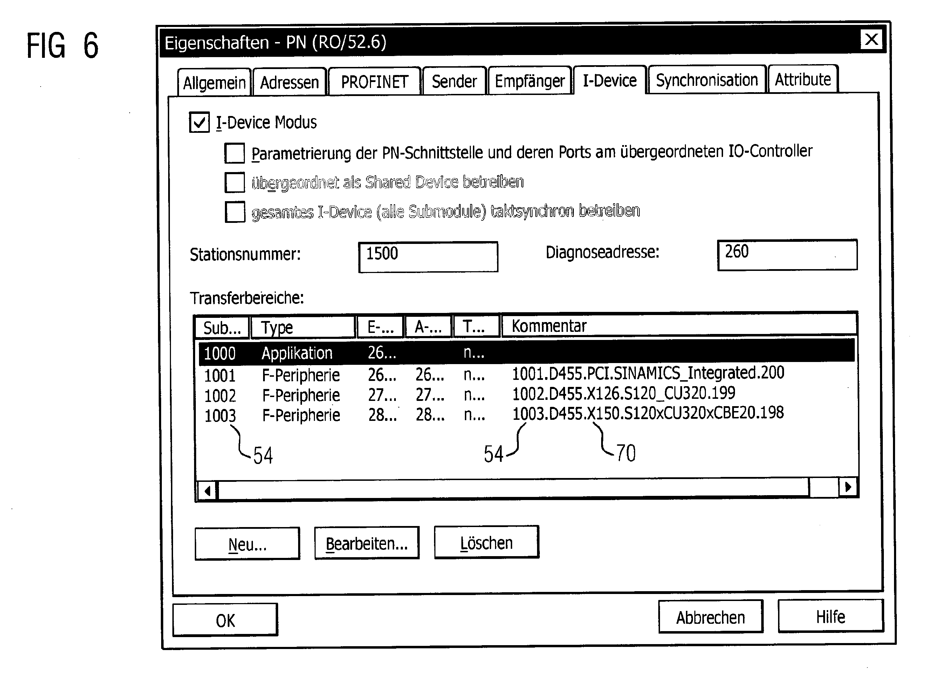

FIG 6 zeigt eine Übername der Daten des Kommunikationsdatensatzes 44 in die Automatisierungslösung für die erste Zentraleinheit 14 in Kommentare 60 der Automatisierungslösung, wobei erkennbar ist, dass die Zuordnung jeweils eines Kommentars 60 zu in der Automatisierungslösung der ersten Zentraleinheit 14 projektierten Kommunikationsbeziehungen anhand jeweils übereinstimmender Kennungen 54 erfolgt.

Einzelne im Vordergrund stehende Aspekte der hier vorgelegten Beschreibung lassen sich damit kurz wie folgt zusammenfassen: Es wird ein Verfahren zum Betrieb eines Automatisierungssystems 10 mit einer ersten und einer zweiten Zentraleinheit 14, 16 sowie eine nach dem Verfahren arbeitende Zentraleinheit 14, 16 angegeben, wobei die erste und die zweite Zentraleinheit 14, 16 kommunikativ verbunden sind, wobei mit der zweiten Zentraleinheit 16 eine Mehrzahl von Automatisierungsgeräten 20, 21, 22 kommunikativ verbunden ist und wobei in einem Kommunikationsdatensatz 44 Informationen zu einer Mehrzahl von Kommunikationskanälen 46 zwischen der zweiten Zentraleinheit und einem jeweiligen Automatisierungsgerät 20, 21, 22 zusammengestellt sind, bei dem anhand des Kommunikationsdatensatzes 44 der ersten Zentraleinheit 14 automatisch Informationen über eine Mehrzahl von Kommunikationsbeziehungen mit Kommunikationskanälen 46 und dem jeweils darüber erreichbaren Automatisierungsgerät 20, 21, 22 übermittelt werden. Speziell wenn anhand des Kommunikationsdatensatzes 44 für die erste Zentraleinheit 14 ein Kommunikationsbaustein 48 mit einer der Anzahl der Kommunikationskanäle 46 in dem Kommunikationsdatensatz 44 entsprechenden Anzahl von Slots 50 erstellt wird, wird aus einer komplexen Projektierung mit dem Kommunikationsbaustein 48 ein einfaches Projektierungsobjekt erstellet, das wie ein Softwarebaustein handhabbar ist und die zugrunde liegende Netzstruktur, auch eine Netzstruktur mit Mischtopologien, vollständig verdeckt. Jeder Slot 50 fungiert als netztypunabhängiger virtueller Repräsentant des zugrunde liegenden Kommunikationskanals 46.

## Patentansprüche

1. Verfahren zum Betrieb eines Automatisierungssystems (10) mit einer ersten und einer zweiten Zentraleinheit (14,16),
wobei die erste und die zweite Zentraleinheit (14,16) kommunikativ verbunden sind und
wobei mit der zweiten Zentraleinheit (16) eine Mehrzahl von Automatisierungsgeräten (20,21, 22) kommunikativ verbunden ist,
**dadurch gekennzeichnet,**
**dass** in einem Kommunikationsdatensatz (44) Informationen zu einer Mehrzahl von Kommunikationskanälen (46) zwischen der zweiten Zentraleinheit (16) und einem jeweiligen Automatisierungsgerät (20,21,22) zusammengestellt sind,
**dass** der ersten Zentraleinheit (14) anhand des Kommunikationsdatensatzes (44) automatisch Informationen über die Kommunikationskanäle (46) zwischen der zweiten Zentraleinheit (16) und dem jeweils darüber erreichbaren Automatisierungsgerät (20,21,22) übermittelt werden, indem
anhand des Kommunikationsdatensatzes (44) für die erste Zentraleinheit (14) ein Kommunikationsbaustein (48) mit einer Anzahl von Eingängen (50) erstellt wird, wobei die Anzahl der Eingänge des Kommunikationsbausteins (48) der Anzahl der für die erste Zentraleinheit (14) relevanten Kommunikationskanäle (46) in dem Kommunikationsdatensatz (44) entspricht,
wobei eine Übertragung von Daten von der ersten Zentraleinheit (14) zu einem mit der zweiten Zentraleinheit kommunikativ verbundenen Automatisierungsgerät (20,21,22) erfolgt,
indem die erste Zentraleinheit (14) die zu übertragenden Daten unter Verwendung des dem jeweiligen Kommunikationskanal (46) entsprechenden Eingangs (50) an den Kommunikationsbaustein (48) übermittelt und
der Kommunikationsbaustein (48) anhand der Daten aus dem Kommunikationsdatensatz (44) die Übermittlung an das jeweilige Automatisierungsgerät (20,21,22) übernimmt.

2. Verfahren nach Anspruch 1, wobei der Kommunikationsdatensatz (44) automatisch aus einem Projektierungsdatensatz (42) erstellt wird, der die zweite Zentraleinheit (16), die daran mittelbar oder unmittelbar angeschlossenen Automatisierungsgeräte (20,21,22) und die zwischen der zweiten Zentraleinheit (16) und jedem Automatisierungsgerät (20,21,22) bestehenden Kommunikationskanäle (46) beschreibt.

3. Verfahren nach Anspruch 2, wobei zur automatischen Erstellung des Kommunikationsdatensatzes (44) aus dem Projektierungsdatensatz (42) im Projektierungsdatensatz (42) Daten identifiziert werden, die einen Kommunikationsendpunkt beschreiben.

4. Verfahren nach Anspruch 2 oder 3, wobei zumindest ein Teil der Kommunikationskanäle (46) Profisafe-Verbindungen sind und wobei für jeden Endpunkt einer Profisafe-Verbindung des Kommunikationsdatensatzes (44) genau ein Eingang (50) in dem Kommunikationsbaustein (48) angelegt wird.

5. Verfahren nach einem der vorangehenden Ansprüche,
wobei in dem Kommunikationsdatensatz (44) die Informationen zu einer Mehrzahl von Kommunikationskanälen (46) zwischen der zweiten Zentraleinheit (16) und einem jeweiligen Automatisierungsgerät (18-22) mit jeweils einer eindeutigen Kennung (54) für jeden Kommunikationskanal (46) zusammengestellt sind, wobei der Kommunikationsdatensatz (44) von der ersten Zentraleinheit (14) importiert wird und anhand der Kennung (54) und einer in einer Automatisierungslösung für die erste Zentraleinheit (14) verwendeten entsprechenden Kennung (54) die jeweiligen Daten des Kommunikationsdatensatzes (44) in die Automatisierungslösung für die erste Zentraleinheit (14) übernommen werden.

6. Verfahren nach Anspruch 5, wobei die Übernahme der Daten des Kommunikationsdatensatz (44) in die Automatisierungslösung für die erste Zentraleinheit (14) in Kommentare (60) der Automatisierungslösung erfolgt.

7. Verfahren nach einem der vorangehenden Ansprüche, wobei die erste Zentraleinheit (14) eine fehlersichere Zentraleinheit ist und wobei der Kommunikationsbaustein (48) als fehlersicherer Kommunikationsbaustein ausgeführt ist.

8. Computerprogramm mit Programmcode-Mitteln, um alle Schritte von jedem beliebigen der Ansprüche 1 bis 7 durchzuführen, wenn das Programm auf einer Zentraleinheit (14,16) eines Automatisierungssystems ausgeführt wird.

9. Digitales Speichermedium mit elektronisch auslesbaren Steuersignalen, die so mit einer Zentraleinheit (14,16) eines Automatisierungssystems zusammenwirken können, dass ein Verfahren nach einem der Ansprüche 1 bis 7 ausgeführt wird.

10. Zentraleinheit (14,16) für ein Automatisierungssystem mit einer Verarbeitungseinheit (30,32) und einem Speicher (34,36), in den ein Computerprogramm (38,40) nach Anspruch 8 geladen ist, das im Betrieb der Zentraleinheit (14,16) durch die Verarbeitungseinheit (30,32) ausgeführt wird.

## Claims

1. Method for operating an automation system (10) having a first and a second central unit (14, 15),
wherein the first and the second central unit (14, 16) are connected for communication purposes and
wherein a plurality of automation devices (20, 21, 22) is connected for communication purposes to the second central unit (16),
**characterised in that**
information relating to a plurality of communication channels (46) between the second central unit and a respective automation device (20, 21, 22) is grouped together in a communication data set (44),
information relating to the communication channels (46) between the second central unit (16) and the respective automation device (20, 21, 22) which can be achieved thereover is automatically transferred to the first central unit (14) with the aid of the communication data set (44), by
grouping a communication module (48) together with a number of inputs (50) with the aid of the communication data set (44) for the first central unit (14), wherein the number of inputs of the communication module (48) corresponds to the number of communication channels (46) relevant for the first central unit (14) in the communication data set (44),
wherein a transmission of data from the first central unit (14) to an automation device (20, 21, 22) which is connected to the second central unit for communication purposes, takes place
by the first central unit (14) transmitting the data to be transmitted to the communication module (48) by using the input (50) corresponding to the respective communication channel (46) and
the communication module (48) transferring the transmission to the respective automation device (20, 21, 22) with the aid of data from the communication data set (44).

2. Method according to claim 1, wherein the communication data set (44) is automatically created from a project planning data set (42), which describes the second central unit (16), the automation devices (20, 21, 22) connected directly or indirectly thereto and the communication channels (46) existing between the second central unit (16) and each automation device (20, 21, 22).

3. Method according to claim 2, wherein data, which describes a communication terminal point, is identified in the project planning data set (42) to automatically create the communication data set (44) from the project planning data set (42).

4. Method according to claim 2 or 3, wherein at least one part of the communication channels (46) are Profisafe connections and wherein for each terminal point of a Profisafe connection of the communication data set (44), precisely one input (50) is applied in the communication module (48).

5. Method according to one of the preceding claims, wherein the information relating to a plurality of communication channels (46) between the second central unit (16) and a respective automation device (18-22) is grouped together in the communication data set (44) with a unique identifier (54) for each communication channel (46) in each instance, wherein the communication data set (44) is imported by the first central unit (14) and with the aid of the identifier (54) and a corresponding identifier (54) used in an automation solution for the first central unit (14), the respective data of the communication data set (44) is transferred into the automation solution for the first central unit (14).

6. Method according to claim 5, wherein the transfer of the data of the communication data set (44) into the automation solution for the first central unit (14) takes place in comments (60) of the automation solution.

7. Method according to one of the preceding claims, wherein the first central unit (14) is a fail-safe central unit and wherein the communication module (48) is embodied as a fail-safe communication module.

8. Computer program having program code means, in order to implement all steps of each one of claims 1 to 7, if the program is run on a central unit (14, 16) of an automation system.

9. Digital storage medium having electronically readable control signals, which can interact with a central unit (14, 16) of an automation system such that a method according to one of claims 1 to 7 is executed.

10. Central unit (14, 16) for an automation system having a processing unit (30, 32) and a memory (34, 36) into which a computer program (38, 40) according to claim 8 is loaded, which is executed by the processing unit (30, 32) during operation of the central unit (14, 16).

## Revendications

1. Procédé pour faire fonctionner un système (10) d'automatisation comprenant une première et une deuxième unités (14, 16) centrales,
la première et la deuxième unités (14, 16) centrales étant reliées en communication et
dans lequel une multiplicité d'appareils (20, 21, 22) d'automatisation est reliée en communication avec la deuxième unité (16) centrale,
**caractérisé**
**en ce que**, dans un jeu (44) de données de communication, sont rassemblées des informations sur une multiplicité de canaux (46) de communication, entre la deuxième unité (16) centrale et un appareil (20, 21, 22) d'automatisation respectif,
**en ce que** la première unité (14) centrale transmet, à l'aide du jeu (44) de données de communication, automatiquement des informations sur les canaux (46) de communication, entre la deuxième unité (16) centrale et l'appareil (20, 21, 22) d'automatisation respectif pouvant être atteint par l'intermédiaire de celle-ci, en
produisant, à l'aide du jeu (44) de données de communication, pour la première unité (14) centrale, un module (48) de communication ayant un certain nombre d'entrées (50), le nombre des entrées du module (48) de communication correspondant, dans le jeu (44) de données de communication, au nombre des canaux (46) de communication pertinents pour la première unité (14) centrale,
dans lequel il s'effectue un transfert de données de la première unité (14) centrale à un appareil (20, 21, 22) d'automatisation relié en communication à la deuxième unité centrale,
par le fait que la première unité (14) centrale transmet les données à transmettre, en utilisant l'entrée (50), correspondant au canal (46) de communication respectif, du module (48) de communication et
le module (48) de communication prend en charge, à l'aide des données provenant du jeu (44) de données de communication, la transmission à l'appareil (20, 21, 22) d'automatisation respectif.

2. Procédé suivant la revendication 1, dans lequel on produit le jeu (44) de données de communication automatiquement à partir d'un jeu (42) de données de projection, qui décrit la deuxième unité (16) centrale, les appareils (20, 21, 22) d'automatisation qui y sont raccordés directement ou indirectement et les canaux (46) de communication existants entre la deuxième unité (16) centrale et chaque appareil (20, 21, 22) d'automatisation.

3. Procédé suivant la revendication 2, dans lequel, pour produire automatiquement le jeu (44) de données de communication à partir du jeu (42) de données de projection, on identifie dans le jeu (42) de données de projection des données qui décrivent un point final de communication.

4. Procédé suivant la revendication 2 ou 3, dans lequel au moins une partie des canaux (46) de communication sont des liaisons profisafe et dans lequel, pour chaque coin d'extrémité d'une liaison profisafe du jeu (44) de données de communication, on met exactement une entrée (50) dans le module (48) de communication.

5. Procédé suivant l'une des revendications précédentes, dans lequel on rassemble, avec respectivement une caractérisation (54) univoque pour chaque canal (46) de communication, dans le jeu (44) de données de communication, les informations sur une multiplicité de canaux (46) de communication entre la deuxième unité (16) centrale et un appareil (18 à 22) d'automatisation respectif, dans lequel le jeu (44) de données de communication est importé de la première unité (14) centrale et, à l'aide de la caractérisation (54) et d'une caractérisation (54) adéquate utilisée dans une solution d'automatisation pour la première unité (14) centrale, les données respectifs du jeu (44) de données de communication sont prises en charge dans la solution d'automatisation pour la première unité (14) centrale.

6. Procédé suivant la revendication 5, dans lequel la prise en charge des données du jeu (44) de données de communication dans la solution d'automatisation s'effectue, pour la première unité (14) centrale, dans des commentaires (60) de la solution d'automatisation.

7. Procédé suivant l'une des revendications précédentes, dans lequel la première unité (14) centrale est une unité centrale sécurisée vis-à-vis des erreurs et le module (48) de communication est réalisé sous la forme d'un module de communication sécurisé vis-à-vis des erreurs.

8. Programme d'ordinateur ayant des moyens de codes de programme, pour effectuer tous les stades de chacune quelconque des revendications 1 à 7, lorsque le programme est réalisé sur une unité (14, 16) centrale d'un système d'automatisation.

9. Support de mémoire numérique ayant des signaux de commande pouvant être lus électroniquement, qui peuvent coopérer avec une unité (14, 16) centrale d'un système d'automatisation, de manière à exécuter un procédé suivant l'une des revendications 1 à 7.

10. Unité (14, 16) centrale pour un système d'automatisation ayant une unité (30, 32) de traitement et une mémoire (34, 36), dans laquelle est chargé un programme (38, 40) d'ordinateur, qui, lorsque l'unité (14, 16) centrale fonctionne, est réalisé par l'unité (30, 32) de traitement.
